# FASCICULE DE BREVET EUROPEEN

(11) **EP 0 394 097 B1**
(45) Date de publication et mention de la délivrance du brevet: **09.03.1994**
(21) Numéro de dépôt: 90400978.4
(22) Date de dépôt: 10.04.1990
(51) Int. Cl.: H04N 1/40

(54) **Dispositif de traitement d'image pour la restitution de demi-teintes**
Bildverarbeitungseinrichtung zur gerasterten Halbtonreproduktion
Image-processing device for halftone reproduction

(30) Priorité: 13.04.1989 FR 8904896
(43) Date de publication de la demande: 24.10.1990
(73) Titulaire: SOCIETE D'APPLICATIONS GENERALES D'ELECTRICITE ET DE MECANIQUE SAGEM, F-75783 Paris Cédex 16 (FR)
(72) Inventeur: Frédéric, Alain, F-95000 Cergy (FR)
(74) Mandataire: Bloch, Gérard

(56) Documents cités:
- EP-A- 0 259 695
- US-A- 4 578 714
- IEEE TRANSACTIONS ON COMMUNICATIONS, vol. COM-29, no. 12, décembre 1981, pages 1898-1925, IEEE, New York, US; J.C. STOFFEL et al.: "A survey of electronic techniques for pictorial image reproduction"

## Description

La présente invention a pour objet un dispositif de traitement d'image pour engendrer, en réponse à une suite de premières valeurs représentant chacune l'intensité d'un pixel de l'image à traiter, intensité susceptible de varier de manière continue, une suite de deuxièmes valeurs représentant chacune l'intensité d'un pixel de l'image traitée, intensité susceptible de varier de manière discrète seulement, comprenant:
- des moyens de comparaison de chaque première valeur à au moins un seuil, pour délivrer en sortie une deuxième valeur relative au même pixel d'image que ladite première valeur, et,
- des moyens de génération dudit seuil.

Un tel dispositif est décrit dans le document EP-A-0 259 695.

Un tel dispositif trouve notamment son application pour la numérisation d'images présentant des plages de demi-teintes, en vue de leur transmission à distance par un système de télécopie, et de leur reproduction par une imprimante non prévue pour rendre les demi-teintes des images initiales. En général, et dans le cas usuel des images du type "noir et blanc", les imprimantes sont en effet prévues pour imprimer, à l'emplacement de chaque pixel, soit un point noir, soit un point blanc, ce qui fait que l'intensité des pixels représentés ne peut prendre que deux valeurs discrètes, l'une relative au blanc, par exemple la valeur 0, et l'autre relative au noir,par exemple la valeur 1. Si le pixel correspondant de l'image d'origine est une demi-teinte, ici un niveau de gris, il ne pourra être représenté fidèlement. Néanmoins, il est possible, grâce à un dispositif du type défini ci-dessus, de restituer les plages de demi-teintes de l'image d'origine en agissant sur la densité et sur la répartition des pixels noirs et blancs de l'image restituée afin que, par un effet optique, une impression de gris soit ressentie par l'observateur de cette image.

On connaît déjà des dispositifs du type défini ci-dessus, dans lesquels le seuil est variable, qui permet par comparaison la transformation de la valeur quelconque de l'amplitude de chaque pixel de l'image d'origine en une valeur binaire, par exemple.

Dans une première catégorie de tels dispositifs, le seuil varie en fonction de la position, dans l'image, du pixel à traiter. A cet effet, on utilise donc une matrice de seuils. Si la dimension de cette matrice est MxN, le pixel situé à l'intersection de la ligne de rang i et de la colonne de rang j de l'image à traiter est comparé au seuil qui se trouve, dans la matrice de seuils, à l'intersection de la ligne de rang I et de la colonne de rang J, I étant le reste de la division de i par M et J étant le reste de la division de j par N. Un tel dispositif a toutefois pour inconvénient de faire apparaître, dans l'image restituée, des motifs de la taille de la matrice de seuils, et qui sont liés au motif choisi pour les seuils dans cette matrice. De plus, un tel dispositif ne procure aucun effet de renforcement des contours de l'image d'origine, ce qui fait que certains traits fins et clairs sur fond plus clair peuvent disparaître dans l'image restituée.

Dans une deuxième catégorie de ces dispositifs à seuil variable, le seuil est une valeur aléatoire ou pseudo-aléatoire uniformément répartie. Les images restituées par ces dispositifs sont libres de tout motif répétitif, mais elles manquent beaucoup de définition et sont d'aspect granuleux.

On connaît également des dispositifs, comme par exemple celui décrit dans la demande WO-A-8807 306 dans lesquels le seuil de comparaison demeurant le même pour chacun des pixels de l'image d'origine, on ne lui compare pas directement la valeur de l'intensité de ce pixel, mais une valeur modifiée qui tient compte, notamment, des valeurs discrètes avec lesquelles ont été restituées les amplitudes des pixels précédemment traités. A cet effet, ces dispositifs sont prévus pour calculer l'erreur commise pour chaque pixel de l'image d'origine en restituant son intensité sous forme binaire, par exemple, de façon à tenir compte de cette erreur lors de la modification des pixels traités par la suite. Ces dispositifs donnent des résultats ne présentant pas les défauts des dispositifs précédents, mais il nécessitent des calculs relativement importants et sont donc de mise en oeuvre relativement lourde et coûteuse.

La présente invention vise à pallier les inconvénients précédents en procurant un dispositif de traitement d'image de mise en oeuvre simple et peu coûteuse et qui restitue des images libres de tout motif répétitif, d'aspect non granuleux, ayant une bonne définition et susceptible de procurer un renforcement des contours dans l'image restituée.

A cet effet, elle a pour objet un dispositif du type défini ci dessus, caractérisé par le fait que lesdits moyens de génération du seuil comprennent:
- des premiers moyens de calcul de la valeur dudit seuil en réponse à des deuxièmes valeurs relatives à une pluralité de pixels précédemment traités, et,
- des moyens de perturbation aléatoire de la valeur calculée dudit seuil.

Dans le dispositif de la présente invention, il n'est pas utilisé de matrice de seuils, donc les images restituées sont libres de tout motif répétitif. Par ailleurs, il est tenu compte des valeurs discrètes avec lesquelles ont été restituées les amplitudes des pixels précédemment traités, ce qui renforce les contours et donne à l'image une qualité satisfaisante, sans que ne soit nécessaire un calcul de l'erreur commise pour chaque pixel de l'image d'origine en restituant son intensité sous forme binaire, par exemple. De plus, de très bons résultats sont obtenus même lorsque le nombre de pixels précédemment traités dont il est tenu compte pour le pixel actuellement traité est relativement réduit. Dans le cas usuel où la suite des pixels traités résulte d'un balayage ligne par ligne de l'image à traiter, cela signifie que les pixels dont il est tenu compte pour le pixel actuellement traité sont relatifs seulement à la portion de la ligne qui précède immédiatement ce pixel. Par comparaison avec certains des dispositifs de l'art antérieur qui nécessitent la mémorisation des pixels de la ligne précédente pour aboutir à un résultat satisfaisant, ceci est un avantage important car il permet de réduire la taille des circuits de mémorisation. Ces résultats remarquables ont été obtenus par la demanderesse en combinant un calcul direct du seuil à partir des valeurs discrètes retenues pour la restitution des pixels précédemment traités avec une perturbation aléatoire de la valeur de ce seuil.

Avantageusement, lesdits premiers moyens de calcul calculent une somme pondérée desdites deuxièmes valeurs relatives à une pluralité de pixels précédemment traités.

Un tel calcul est extrêmement simple à mettre en oeuvre, surtout dans le cas très fréquent où l'imprimante n'étant susceptible d'imprimer que des pixels noirs ou blancs, les deuxièmes valeurs sont des nombres binaires très faciles à manipuler et à traiter.

Avantageusement encore, lesdits moyens de perturbation aléatoire comprennent:
- des moyens de génération d'une suite pseudo-aléatoire de troisièmes valeurs,
- des moyens de mémorisation d'une pluralité de troisièmes valeurs précédemment engendrées,
- des deuxièmes moyens de calcul, pour calculer une somme pondérée des troisièmes valeurs de la dite pluralité, et,
- des moyens pour ajouter, à la valeur en sortie desdits premiers moyens de calcul, ladite somme pondérée.

Là encore, de tels moyens sont de mise en oeuvre très simple.

La présente invention sera mieux comprise grâce à la description suivante de plusieurs formes de réalisation préférées du dispositif de l'invention, faite en se référant aux dessins annexés, sur lesquels:
- la figure 1 représente une première forme de réalisation du dispositif de traitement d'image de l'invention,
- la figure 2 représente une deuxième forme de réalisation du dispositif de l'invention, pour laquelle les pixels restitués sont binaires, et,
- la figure 3 représente une troisième forme de réalisation du dispositif de l'invention, pour laquelle les pixels d'origine sont analogiques.

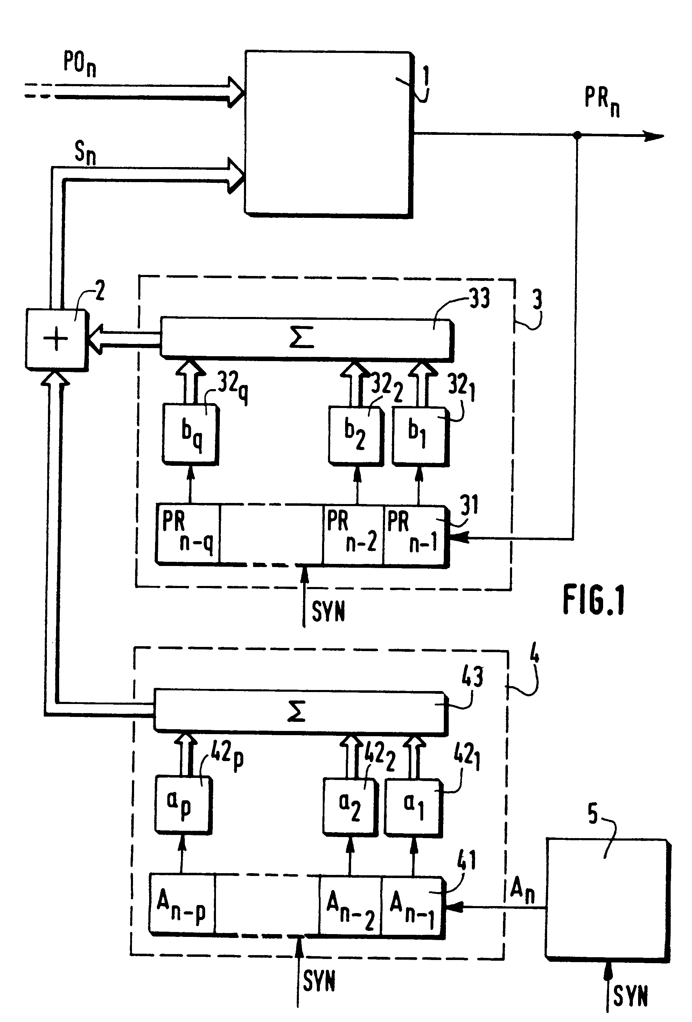

En se référant à la figure 1, est maintenant décrit un dispositif de traitement d'image permettant notamment la restitution, à l'aide d'une imprimante ne pouvant imprimer que des points soit totalement noirs soit totalement blancs, d'une image comportant des plages de demi-teintes ,c'est à dire susceptible de prendre n'importe quelle nuance de gris, ou tout au moins un assez grand nombre de telles nuances.

Cette image d'origine, à traiter, est délivrée au dispositif de l'invention par une source non représentée dans un souci de simplicité. Cette source est, de façon connue, agencée pour délivrer, à un certain rythme, une suite de valeurs, chacune étant notée POₙ et représentant l'intensité lumineuse d'un pixel, ou élément d'image, de l'image d'origine. Un tel pixel sera, dans la suite, appelé pixel d'origine. Un pixel d'origine est donc caractérisé par le fait que son intensité est susceptible de prendre, dans l'intervalle compris entre la valeur relative au blanc et la valeur relative au noir, n'importe quelle valeur ou tout au moins un assez grand nombre de valeurs. En pratique, la source délivre ces valeurs sous la forme d'un échantillon d'un signal électrique, signal électrique qui peut être soit analogique soit numérique. Dans le cas d'un signal analogique, l'intensité du pixel d'origine peut donc prendre n'importe quelle valeur, tandis que dans le cas d'un signal numérique, cette intensité ne pourra prendre qu'un certain nombre de valeurs, par exemple 2^{k} si le signal numérique est codé sur k bits, ou éléments binaires. Toutefois, dans ce cas, le nombre k est assez grand pour que l'on puisse considérer que l'intensité de chaque pixel d'origine est susceptible de varier de manière continue.

Dans la suite, et sauf indication contraire, on considérera que les valeurs POₙ sont délivrées sous forme numérique.

La source délivrant les valeurs POₙ est par exemple un analyseur d'image qui balaye l'image d'origine ligne par ligne et qui délivre, en même temps que les valeurs POₙ, un signal de synchronisation SYN pour indiquer au dispositif de traitement d'image de l'invention à quel instant de rang n le signal délivré est représentatif de la valeur POₙ de l'intensité du pixel d'origine de rang n, puis à quels instants de rang n+1, n+2,... il sera représentatif des valeurs POₙ₊₁, POₙ₊₂,... et ainsi de suite.

Chaque valeur POₙ est appliquée à une première entrée d'un comparateur numérique 1 pourvu d'une deuxième entrée recevant une valeur Sₙ représentant le seuil de comparaison à l'instant de rang n, et d'une sortie délivrant une valeur PRₙ représentant l'intensité du pixel de l'image traitée et restituée correspondant au pixel d'origine de rang n. Tout pixel de l'image restituée sera appelé dans la suite pixel restitué.

Ici, et compte-tenu des possibilités de l'imprimante, l'intensité d'un pixel restitué ne peut varier que de manière discrète, en prenant seulement les deux valeurs possibles 0 et 1 relatives par exemple au blanc et au noir, respectivement.

Le comparateur 1 délivre donc une valeur PRₙ égale à 0 si la valeur POₙ est inférieure à la valeur Sₙ et une valeur PRₙ égale à 1 dans le cas contraire.

La valeur du seuil Sₙ est obtenue en sortie d'un sommateur numérique 2 qui additionne les valeurs en sortie de deux circuits de sommation pondérée 3 et 4.

Le circuit de sommation pondérée 3 est pourvu d'une entrée reliée à la sortie du comparateur 1 et qui reçoit donc, à chaque instant de rang n, la valeur PRₙ de l'intensité du pixel restitué de rang n. Il comprend ici un circuit de mémorisation 31 dans lequel sont mémorisées les valeurs PRₙ₋₁, PRₙ₋₂,... PR_{n-q} relative à la pluralité de q pixels précédemment traités. Ici, compte tenu de la nature binaire des valeurs PRₙ₋₁, PRₙ₋₂,... PR_{n-q}, le circuit 31 est un simple registre à décalage dont le décalage est commandé par le signal SYN.

Le circuit de sommation pondérée 3 est également pourvu d'une batterie de q circuits de pondération 32₁, 32₂,... 32_{q} des valeurs PRₙ₋₁, PRₙ₋₂,... PR_{n-q} par des coefficients b₁,b₂,... b_{q} respectivement.

Enfin, le circuit de sommation pondérée 3 comprend un circuit de sommation numérique 33 pour faire la somme des valeurs pondérées en sortie des circuits 32₁, 32₂,... 32_{q}

Le circuit de sommation pondérée 4 est pourvu d'une entrée reliée à la sortie d'un générateur pseudo-aléatoire 5. Le générateur pseudo-aléatoire 5 est ici du type connu qui, synchronisé par le signal SYN, engendre une suite pseudo-aléatoire de valeurs binaires, la valeur engendrée à l'instant de rang n étant notée Aₙ. Le circuit de sommation pondérée 4 est comparable au circuit 3 et comprend donc ici un circuit de mémorisation 41 dans lequel sont mémorisées les valeurs Aₙ₋₁, Aₙ₋₂,... Aₙ₋ₚ d'une pluralité de p valeurs précédemment engendrées. Ici, compte tenu de la nature binaire des valeurs Aₙ₋₁, Aₙ₋₂,... Aₙ₋ₚ, le circuit 41 est un simple registre à décalage dont le décalage est commandé par le signal SYN.

Le circuit de sommation pondérée 4 est également pourvu d'une batterie de p circuits de pondération 42₁, 42₂,... 42ₚ des valeurs Aₙ₋₁, Aₙ₋₂,... Aₙ₋ₚ par des coefficients a₁,a₂,... aₚ respectivement.

Enfin, le circuit de sommation pondérée 4 comprend un circuit de sommation numérique 43 pour faire la somme des valeurs pondérées en sortie des circuits 42₁, 42₂,... 42ₚ

Ici, et toujours compte-tenu de la nature binaire des valeurs à pondérer, les circuits de pondération sont de simples registres contenant les valeurs des coefficients de pondération a₁,a₂,... aₚ et b₁,b₂,... b_{q} sous forme numérique et dont le contenu et délivré ou non, par exemple sous forme d'un certain nombre de bits en parallèle, aux circuits de sommation numérique selon la valeur binaire à pondérer.

Le dispositif qui vient d'être décrit fonctionne comme cela va maintenant être décrit.

Après une assez longue plage de blanc, dans l'image d'origine à traiter, les valeurs PRₙ₋₁, PRₙ₋₂,... PR_{n-q} sont toutes nulles, car la sortie du comparateur 1 reste au niveau bas, quelle que soit la valeur du seuil, puisque les valeurs POₙ₋₁, POₙ₋₂,... PO_{n-q} sont nulles en permanence.

Par contre, lorsque l'image d'origine comprend une plage de demi-teinte, ici grise, le premier pixel d'origine à être gris après la plage de blanc, par exemple le pixel de rang n d'intensité POₙ va être restitué sous la forme d'un pixel restitué d'intensité PRₙ égale soit à 0 soit à 1, selon la valeur relative par rapport au seuil Sₙ de POₙ. Or, la valeur du seuil Sₙ est à ce moment égale à la valeur en sortie du circuit 4, puisque toutes les valeurs PRₙ₋₁, PRₙ₋₂,... PR_{n-q} mémorisées dans le circuit 3 étant nulles, la sortie de ce circuit 3 est également nulle. Les coefficients a₁,a₂,... aₚ sont ajustés pour que la probabilité pour que le pixel de rang n soit restitué avec une valeur 1, c'est à dire sous forme d'un point noir, soit raisonnablement élevée, de façon à ce que le contour de la plage grise soit bien apparent sur l'image restituée. Si c'est effectivement ce qui se produit, la valeur PRₙ va donc être égale à 1, ce qui va modifier la sortie du circuit 3 à l'instant de rang suivant n+1,c'est à dire pour le traitement du pixel d'origine de valeur POₙ₊₁. Si cette valeur est la même que la valeur POₙ, les chances de voir attribuer à l'intensité du pixel restitué une valeur PRₙ₊₁ égale à 1 sont beaucoup plus faible que pour le pixel de rang n, puisque la sortie du circuit 3 a pris une valeur plus élevée, relevant ainsi la valeur Sₙ₊₁ du seuil par rapport à sa valeur Sn. Le pixel de rang n+1 a donc des chances raisonnables d'être restitué par un point blanc. Naturellement, si le pixel de rang n s'était trouvé restitué sous forme d'un point blanc, la valeur PRₙ aurait été nulle et les chances du pixel de rang n+1 de se voir restitué sous forme d'un point noir auraient été beaucoup plus élevées.

Le traitement du pixel de rang n+2 a ensuite lieu, pour lequel les valeurs PRₙ et PRₙ₊₁ vont venir modifier la valeur du seuil Sₙ₊₂, cette valeur étant par ailleurs perturbée de façon aléatoire par la sortie du circuit 4, et ainsi de suite.

Naturellement, il est à la portée de l'homme de métier d'ajuster, par exemple expérimentalement, les valeurs des coefficients a₁,a₂,... aₚ et b₁,b₂,... b_{q} pour que le résultat obtenu soit satisfaisant. D'une manière générale, il est préférable que ceux-ci soient choisis pour que l'influence, sur le seuil, du générateur pseudo-aléatoire 5 soit sensiblement moindre que celle de la sortie du comparateur 1.

De manière évidente, il en va,pour le rendu des plages de noir de l'image d'origine, de la même manière que pour le rendu des plages de blanc. Pour ces plages de noir, les valeurs PRₙ₋₁, PRₙ₋₂,... PR_{n-q} ont toutes la valeur 1.

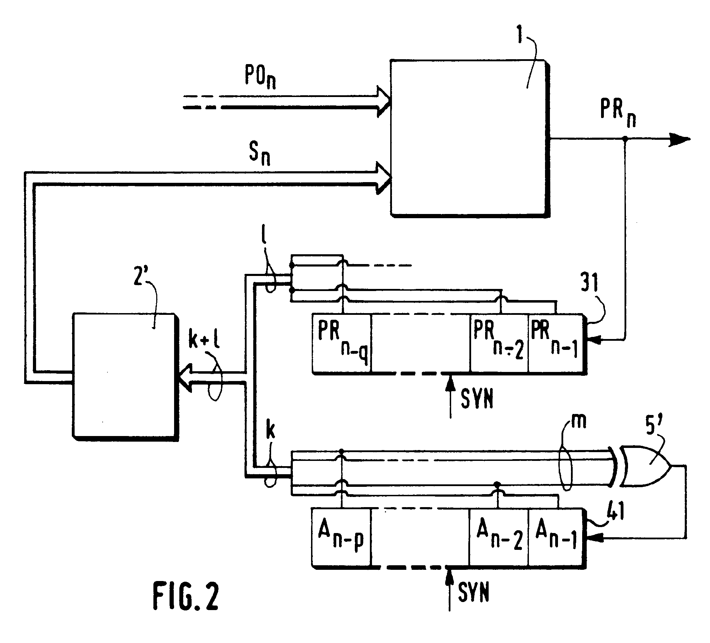

Sur la figure 2 a été représentée une variante du dispositif de l'invention de construction particulièrement simple.

Dans cette variante, le générateur 5 est supprimé et il est prévu, pour assurer la même fonction, une porte "OU exclusif" 5' pourvue de m entrées. De façon connue, les entrées de la porte 5' sont reliées chacune à une de m sorties parallèles de registre 41, parmi les p sorties disponibles. La sortie de la porte 5' est reliée à l'entrée série du registre 41. Ainsi se trouve formé un générateur de séquence pseudo-aléatoire connu de l'homme du métier sous le nom anglo-saxon de "scrambler". La période de répétition de ce générateur est de 2^{p+1}-1 périodes du signal SYN, lorsque les m entées de la porte 5' sont judicieusement choisies.

Dans la variante de la figure 2, les circuits de sommation 2, 33 et 43, ainsi que les circuits de pondération 32₁, 32₂,... 32_{q} et 42₁, 42₂,... 42ₚ sont supprimés. Une simple mémoire 2', de type RAM ou ROM, assure à elle seule la fonction de ces circuits. A cet effet, la mémoire 2' comprend une pluralité de cases mémoires. Chaque case est adressée par k bits choisis parmi les p bits représentatifs de la sortie parallèle du registre 41 et par l bits choisis parmi les q bits représentatifs de la sortie parallèle du registre 31. Chaque case ainsi adressée contient le résultat des calculs effectués par les circuits 2, 33, 43, 32₁, 32₂,... 32_{q} et 42₁, 42₂,... 42ₚ de la figure 1.

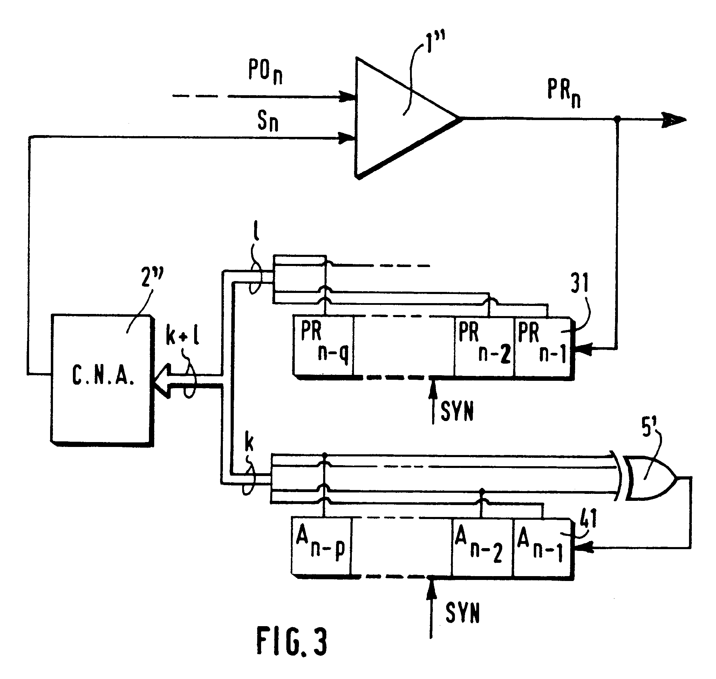

Sur la figure 3 a été représentée une variante du dispositif de la figure 2 dans le cas où les valeurs telles que POₙ sont délivrées sous forme analogique par la source non-représentée.

Dans ce cas, le comparateur numérique 1 est remplacé par un comparateur analogique 1'', et la mémoire 2' par un convertisseur numérique-analogique 2''. On obtient par exemple des résultats satisfaisants lorsque le convertisseur numérique-analogique 2'' est pourvu d'une entrée numérique à 4 bits, c'est à dire à 4 entrées binaires. Le bit de plus fort poids reçoit la valeur PRₙ₋₁, le bit suivant la valeur PRₙ₋₂,et les deux bits de plus faible poids deux valeurs en sortie du registre 41. Si le convertisseur 2'' effectue une conversion linéaire, on peut dire que tout se passe comme dans le dispositif de la figure 1 avec des coefficients b₁, b₂, a₁ et a₂ respectivement proportionnels à 1, 1/2, 1/4 et 1/8.

Dans le cas où l'on utilise un comparateur qui délivre une valeur PRₙ égale à 1 si la valeur POₙ est inférieure à la valeur Sₙ, et une valeur PRₙ égale à 0 dans le cas contraire, il est nécessaire d'inverser les valeurs binaires mémorisées dans le registre 31 avant de les appliquer aux entrées binaires de plus fort poids du convertisseur numérique-analogique.

Naturellement, le coefficient de conversion du convertisseur 2'' de la figure 3, comme le contenu des cases de la mémoire 2' dans le cas de la figure 2, ainsi que les valeurs des coefficients de pondération a₁,a₂,... aₚ et b₁,b₂,... b_{q} dans le cas de la figure 1, sont ajustés pour qu'il n'y ait pas de dérive du système sous l'effet de la réaction représentée par le bouclage de la valeur de sortie sur la valeur du seuil. De même, il peut être tenu compte, en jouant sur ces coefficients, d'une éventuelle non-linéarité de l'imprimante relative à l'intensité des pixels qu'elle imprime.

Dans la description qui vient d'être faite, on n'a considéré que le cas très fréquent où l'imprimante n'est susceptible que d'imprimer des points noirs ou blancs et donc où l'image à traiter est une image du type habituellement désigné par "noir et blanc". Il est évident que le dispositif de l'invention n'est pas limité à cette situation et s'applique à la restitution de n'importe qu'elle image monochrome, quelle qu'en soit la couleur et même à la restitution d'images en plusieurs couleurs, après décomposition de celles-ci en trois images monochromes qui sont alors traitées individuellement. De même, et en revenant au cas monochrome, il est possible que l'imprimante, ou tout autre dispositif de restitution d'image, soit prévu pour restituer, en plus de pixel noirs ou blancs, des pixels gris, mais en nombre limité. Par exemple un dispositif de restitution pourrait être capable de restituer des pixels d'intensité pouvant prendre 4 valeurs discrètes correspondant respectivement au blanc, au gris clair, au gris foncé et au noir. Il est à la portée de l'homme de métier d'adapter le dispositif de l'invention à cette situation, notamment en remplaçant les registres à décalage de la figure 1 par des dispositifs de mémorisation plus sophistiqués capables de mémoriser chacune des 4 valeurs discrètes possibles en sortie du dispositif.

Le dispositif de l'invention peut être employé avec un balayage de l'image d'origine de type classique, dans lequel chaque ligne est balayée dans le même sens, ou avec un balayage de type "serpentin", dans lequel lorsqu'une ligne a été balayée de droite à gauche, la ligne suivante est balayée de gauche à droite, et ainsi de suite.

Enfin, si le dispositif de l'invention fournit, comme cela a été indiqué, de bons résultats sans qu'il soit nécessaire de faire intervenir, dans le traitement d'un pixel, le résultat du traitement du ou des pixels voisins de la ligne précédente, rien ne s'oppose à ce qu'il en soit ainsi dans certains cas délicats. Il suffit de prévoir les dispositifs adéquats de mémorisation des valeurs restituées pour ces pixels.

## Revendications

1. Dispositif de traitement d'image pour engendrer, en réponse à une suite de premières valeurs (POₙ) représentant chacune l'intensité d'un pixel de l'image à traiter, intensité susceptible de varier de manière continue, une suite de deuxièmes valeurs (PRₙ) représentant chacune l'intensité d'un pixel de l'image traitée, intensité susceptible de varier de manière discrète seulement, comprenant:
- des moyens de comparaison (1; 1'') de chaque première valeur (POₙ) à au moins un seuil (Sₙ), pour délivrer en sortie une deuxième valeur (PRₙ) relative au même pixel d'image que ladite première valeur (POₙ), et,
- des moyens de génération (2, 3, 4, 5; 2', 5', 31, 41; 2'', 5', 31, 41) dudit seuil (Sₙ), dispositif caractérisé par le fait que lesdits moyens de génération du seuil comprennent:
- des premiers moyens de calcul (3; 2', 31; 2'', 31) de la valeur dudit seuil en réponse à des deuxièmes valeurs (PRₙ₋₁, PRₙ₋₂,... PR_{n-q}) relatives à une pluralité de pixels précédemment traités, et,
- des moyens (2, 4, 5; 2', 41, 5'; 2'', 41, 5') de perturbation aléatoire de la valeur calculée dudit seuil.

2. Dispositif selon la revendication 1, dans lequel lesdits premiers moyens de calcul (3; 2', 31; 2'', 31) calculent une somme pondérée desdites deuxièmes valeurs (PRₙ₋₁, PRₙ₋₂,... PR_{n-q}) relatives à une pluralité de pixels précédemment traités.

3. Dispositif selon l'une des revendications 1 ou 2, dans lequel lesdits moyens de perturbation aléatoire comprennent:
- des moyens de génération (5; 41, 5') d'une suite pseudo-aléatoire de troisièmes valeurs (Aₙ),
- des moyens de mémorisation (41) d'une pluralité de troisièmes valeurs (Aₙ₋₁, Aₙ₋₂,... Aₙ₋ₚ) précédemment engendrées,
- des deuxièmes moyens de calcul (42₁, 42₂,... 42ₚ, 43; 2'; 2''), pour calculer une somme pondérée des troisièmes valeurs de la dite pluralité, et,
- des moyens (2, 2', 2'') pour ajouter, à la valeur en sortie desdits premiers moyens de calcul, ladite somme pondérée.

4. Dispositif selon l'une des revendications 1 à 3, dans lequel l'intensité des pixels de l'image traitée étant susceptible de prendre deux valeurs seulement, et lesdites deuxièmes valeurs mémorisées (PRₙ₋₁, PRₙ₋₂,... PR_{n-q}) étant en conséquence binaires, lesdits premiers moyens de calcul comprennent une mémoire (2') adressée par lesdites deuxièmes valeurs mémorisées.

5. Dispositif selon l'une des revendications 1 à 3, dans lequel:
- lesdites premières valeurs (POₙ) étant sous forme analogique, et,
- l'intensité des pixels de l'image traitée étant susceptible de prendre deux valeurs seulement, et lesdites deuxièmes valeurs mémorisées (PRₙ₋₁, PRₙ₋₂,... PR_{n-q}) étant en conséquence binaires,
- lesdits premiers moyens de calcul comprennent un convertisseur analogique-numérique (2'') dont les entrées binaires de plus fort poids reçoivent lesdites deuxièmes valeurs mémorisées, et les entrées binaires de plus faible poids des éléments binaires en sortie desdits moyens de perturbation (5', 41).

## Patentansprüche

1. Bildverarbeitungseinrichtung, um in Abhängigkeit von einer Folge von ersten Werten (POₙ), die jeweils die Intensität eines Pixels des zu verarbeitenden Bildes darstellen, wobei die Intensität in kontinuerlicher Weise wechseln kann, eine Folge von zweiten Werten (PRₙ) zu erzeugen, die jeweils die Intensität eines Pixels des verarbeiteten Bildes darstellen, wobei die Intensität nur sprunghaft wechseln kann, umfassend:
- Mittel zum Vergleichen (1; 1'') jedes ersten Wertes (POₙ) mit mindestens einem Schwellwert (Sₙ), um am Ausgang einen zweiten Wert (PRₙ) zu liefern, der sich auf dasselbe Bildpixel bezieht wie der erste Wert (POₙ), und
- Mittel zur Erzeugung (2, 3, 4, 5; 2', 5', 31, 41; 2'', 5', 31, 41) dieses Schwellwertes (Sₙ),
Einrichtung, dadurch gekennzeichnet, daß die Mittel zur Erzeugung des Schwellwertes umfassen:
- erste Mittel zur Berechnung (3; 2', 31; 2'', 31) des Schwellwertes in Abhängigkeit von zweiten Werten (PRₙ₋₁, PRₙ₋₂, ... PR_{n-q}), die sich auf eine Vielzahl von vorher verarbeiteten Pixeln beziehen, und
- Mittel (2, 4, 5; 2', 41, 5'; 2'', 41, 5') zur stochastischen Störung des berechneten Schwellwertes.

2. Einrichtung nach Anspruch 1, bei der die genannten ersten Mittel zur Berechnung (3; 2', 31; 2'', 31) eine gewichtete Summe der zweiten Werte (PRₙ₋₁, PRₙ₋₂, ... PR_{n-q}), die sich auf eine Vielzahl von vorher verarbeiteten Pixeln beziehen, berechnen.

3. Einrichtung nach einem der Ansprüche 1 oder 2, bei der die genannten Mittel zur zufallsabhängigen Störung umfassen:
- Mittel zur Erzeugung (5; 41, 5') einer pseudostochastischen Folge von dritten Werten (Aₙ),
- Mittel zur Speicherung (41) einer Vielzahl von vorher erzeugten dritten Werten (Aₙ₋₁, Aₙ₋₂, ... Aₙ₋ₚ),
- zweite Mittel zur Berechnung (42₁, 42₂, ... 42ₚ, 43; 2'; 2''), um eine gewichtete Summe der dritten Werte dieser Vielzahl zu berechnen, und
- Mittel (2, 2'; 2''), um diese gewichtete Summe dem Wert am Ausgang der ersten Mittel zur Berechnung hinzuzufügen.

4. Einrichtung nach einem der Ansprüche 1 bis 3, bei der die ersten Mittel zur Berechnung einen Speicher (2') umfassen, der von den gespeicherten zweiten Werten adressiert wird, wobei die Intensität der Pixel des verarbeiteten Bildes nur zwei Werte annehmen können und die genannten gespeicherten zweiten Werte (PRₙ₋₁, PRₙ₋₂, ... PR_{n-q}) somit binär sind.

5. Einrichtung nach einem der Ansprüche 1 bis 3, bei der:
- die ersten Mittel zur Berechnung einen Digital-Analog-Umsetzer (2'') umfassen, dessen Binäreingänge mit der stärksten Gewichtung die gespeicherten zweiten Werte empfangen und dessen Binäreingänge mit der schwächsten Gewichtung binäre Elemente am Ausgang der Mittel zur Störung (5', 41) empfangen, wobei
- die ersten Werte (POₙ) in analoger Form vorliegen und
- die Intensität der Pixel des verarbeiteten Bildes nur zwei Werte annehmen können und diese gespeicherten zweiten Werte (PRₙ₋₁, PRₙ₋₂, ... PR_{n-q}) somit binär sind.

## Claims

1. Device for processing an image for producing, in response to a series of first values (POₙ) each representing the intensity of a pixel of the image to be processed, the intensity being able to vary continuously, a series of second values (PRₙ) each representing the intensity of a pixel of the processed image, the intensity being able to vary only in a discrete way**,** comprising :
- means (1; 1'') for the comparison of each first value (POₙ) with at least one threshold (Sₙ ), for supplying at the output a second value (PRₙ) relating to the same image pixel as said first value (POₙ), and,
- means (2, 3, 4, 5; 2', 5', 31, 41; 2'', 5', 31, 41) for generating said threshold (Sₙ),
device characterised by the fact that said means for generating the threshold comprise:
- first means (3; 2', 31; 2'', 31) for calculating the value of said threshold in response to second values (PRₙ₋₁, PRₙ₋₂,...PR_{n-q}) relating to a plurality of previously processed pixels and,
- means (2, 4, 5; 2', 41, 5'; 2'', 41, 5') for the random disturbance of the calculated value of said threshold.

2. Device according to Claim 1, in which said first calculation means (3; 2', 31; 2'', 31) calculate a ponderal sum of said second values (PRₙ₋₁, PRₙ₋₂ ,...PR_{n-q} )relating to a plurality of previously processed pixels.

3. Device according to one of Claims 1 or 2, in which said random disturbance means comprise:
- means (5; 41, 5') for the generation of a pseudo-random series of third values (Aₙ),
- means (41) for memorising a plurality of previously produced third values (Aₙ₋₁, Aₙ₋₂,...Aₙ₋ₚ),
- second calculation means (42₁ , 42₂ ,...42ₚ , 43; 2'; 2''), for calculating a ponderal sum of the third values of said plurality, and,
- means (2, 2', 2'') for adding, to the output value of said first calculation means, said ponderal sum.

4. Device according to one of Claims 1 to 3, in which, since the intensity of the pixels of the processed image is able to adopt only two values and said second memorised values (PRₙ₋₁, PRₙ₋₂ ,...PR_{n-q} ) are consequently binary, said first calculation means comprise a memory (2') addressed by said second memorised values.

5. Device according to one of Claims 1 to 3, in which:
- since said first values (POn ) are in analog form, and,
- since the intensity of the pixels of the processed image is able to adopt only two values, and said second memorised values (PRₙ₋₁, PRₙ₋₂,...PR_{n-q}) are consequently binary,
- said first calculation means comprise an analog-to-digital converter (2'') whereof the binary inputs with the greatest weight receive the said second memorised values and the binary inputs with the smallest weight binary elements at the output of said disturbance means (5', 41).
